# EUROPEAN PATENT APPLICATION

(11) **EP 2 660 768 A1**
(43) Date of publication of application: **06.11.2013**
(21) Application number: 10861354.8
(22) Date of filing: 30.12.2010
(51) Int. Cl.: G06Q 40/00

(54) **REMOTE COMMUNICATION TERMINAL FOR CARRYING OUT GAMING SESSIONS ON THE STOCK MARKETS**

(71) Applicant: Kligman, Ilya Vladimirovich, St.Petersburg 197198 (RU); Migalev, Cergey Vladimirovich, Rostov-na-Donu 344000 (RU)
(72) Inventor: Kligman, Ilya Vladimirovich, St.Petersburg 197198 (RU); Migalev, Cergey Vladimirovich, Rostov-na-Donu 344000 (RU)
(74) Representative: Kietzmann, Manfred
(86) International application number: PCT/RU2010/000809
(87) International publication number: WO 2012/091604

(57) **Abstract**

The invention relates to the systems for assistance in financial transactions. The terminal for trading on the exchange markets, comprising a monitor and a keyboard or a monitor with a keyboard on a monitor screen, a device providing transfer of funds to user's account and/or write-off of funds from the user's account and/or money output, a device for remote connection in the form of the programming and computing unit having a feature of displaying of the graphic interface with the fields for displaying of target information, connected with the control server for the user's account state. The device providing transfer of funds to the user's account and/or write-off of funds from the user's account and/or money output, produced in the form of a unit built into the terminal case, or located outside the latter at a distance and connected with the programming and computing unit having a feature of remote connection with the servers of the exchange markets and information agencies for displaying in the specified fields of information about the current quotations, stakes and calculation of profit and loss for each transaction, thus the specified unit also has a feature of displaying of stakes and with a feature of input of the price for a rate (point) change and a stake amount through the keyboard.

## Description

The invention relates to the systems for assistance in financial transactions, providing fast trading and fast distribution of material remuneration as a result of trading.

The prior art is the exchange trading system comprising of a computer; many information sets about tendering received by the computer, and each of the abovementioned information sets about tendering describes trading session of the first trader; many information sets about quotas of the trading received by the computer, and each of the abovementioned information sets about quotas of the trading describes trading held by the order of the second trader; set of the preset acceptable parameters of trading and software features carried out by the computer to compare information sets about tendering with information sets about quotas of the trading and to define coincidences if information set about tendering and information set about quotas of the trading conform within a set of preset acceptable trading parameters (RU No.2259586, G 06 F 17/60, published 2005.08.27).

Weakness of the present systems is its complexity not only in hardware but also in insufficient functionality excluding possibility of remote access to the trading of other persons, but not only officially registered for participation in trading.

The prior art is the remote communication terminal for trading on the exchange markets, comprising of a monitor and a push-button or touch keyboard or a touch monitor with a keyboard on a monitor screen, a payment card reader, a money input system, a device for remote connection in the form of a programming and computing unit having feature of graphic interface displaying with the fields for target information displaying, with the relevant control server for the user's account state, as well as money output device, characterized in that the programming and computing unit has additional feature of remote connection with servers of the exchange markets and information agencies for displaying in the specified fields of information about the current quotations, stakes and calculation of profit and loss for each transaction, thus the specified unit also has a feature of displaying of stakes, with a feature of input of the price for a point change and a stake amount through the keyboard and transfer of a premium to the account of a payment card holder or output of a premium through a money output device (RU No. 64405, G06F19/00, published 27.06.2007).

The disadvantage of this solution is that there is restriction of amounts input: only a payment card is applied. At the moment various payments mechanisms which can be used in the mode of a direct crediting of the trader account are developed. Restriction for payment cards usage significantly narrows a circle of users and does not give opportunity to hold game sessions to those who use other financial mechanisms or have no possibility to register and credit a payment card.

The given solution is accepted as a prototype for the claimed object.

The chief matter of invention is implementation of the terminal for simple style trading.

Such terminal is qualified as the gaming equipment and can be placed in game clubs, casinos and club-type resting places.

The terminal is operated according to the principles of Forex international exchange market. To ensure normal operation of such terminal it is necessary to provide real time broadcasting of the currency market quotations for the trading tools on that terminal and to implement the profit calculation algorithm for transactions made by a client. Quotations source can be both widely known information sources - "Reuters", "Bloomberg", "Tenfore", and dealing centres providing access to trade operations on Forex market via the Internet.

Besides, the transactions made through the terminal can be introduced, through one of the dealing centres, to the real market that makes such terminal not the gambling and staking equipment but the remote terminal for the stock exchange transactions.

The present invention is focused on the technical result achievement consisting in cutting of time for transactions owning to usage of various systems of input and movement of money funds.

The claimed technical result is obtained by the fact that the remote communication terminal for trading on the exchange markets, comprising a monitor and a keyboard or a monitor with a keyboard on a monitor screen, a device providing transfer of funds to user's account and/or write-off of funds from the user's account and/or money output, a device for remote connection in the form of the programming and computing unit having a feature of displaying of the graphic interface with the fields for displaying of target information, connected with the control server for the user's account state, a device providing transfer of funds to the user's account and/or write-off of funds from the user's account and/or money output, produced in the form of a unit built into the terminal case, or located outside the latter at a distance and connected with the programming and computing unit having a feature of remote connection with the servers of the exchange markets and information agencies for displaying in the specified fields of information about the current quotations, stakes and calculation of profit and loss for each transaction, thus the specified unit also has a feature of displaying of stakes and with a feature of input of the price for a rate (point) change and a stake amount through the keyboard.

Thus the following additions are applicable, for example:
- to simplify access to the terminal and transfer of the amount into the trading account of the clients it is additionally equipped with the dactyloscopic control and authentication system.
- to manage the terminal the latter is additionally equipped with a voice control system.

The specified features are essential and are interconnected with development of a steady set of essential features, sufficient to receive the demanded technical result.

The present invention is explained by a specific case of execution which, however is not unique, but visually demonstrates possibility of achievement of demanded technical result.

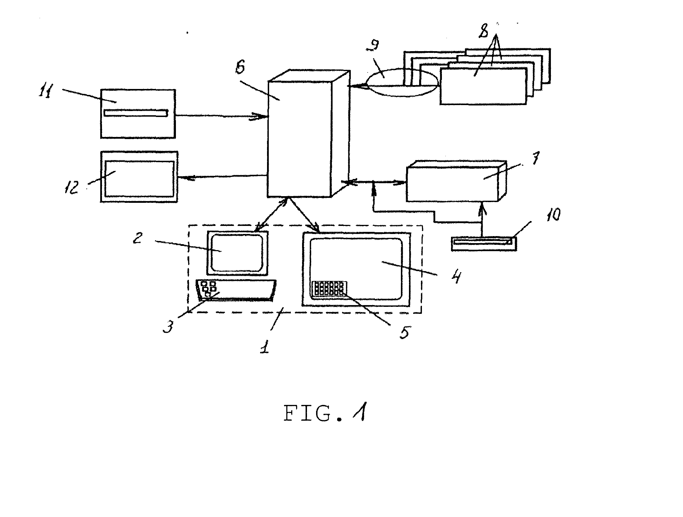

On fig.1 - terminal flowchart.

The remote communication terminal for trading on the exchange comprises the information input 1 and reading device in the form of a monitor 2 and a push-button or touch keyboard 3 or a touch monitor 4 with a keyboard 5 on a monitor screen, a remote connection device 6 in the form of the programming and computing unit having a feature of displaying of the graphic interface with fields for displaying of target information. The present programming and computing unit is connected on the one side with the relevant control server 7 or the user's account state, for example the bank issuing a payment, (for example, credit and financial) card if the access to the trader's account is provided through the card, and on the other side with a source(s) of 8 quotations and other exchange information, such as - "Reuters", "Bloomberg", "Tenfore", and dealing centers providing access to the trade operations on the Forex market on the Internet 9).

Besides, the terminal comprises, for example, the financial and credit card reader, directly or through a device 6 connected with the control server 7 for the user's account state.

The terminal also comprises the money input device 11 and the money output device 12 that allows to pay for the stake and to receive a premium at the place of the terminal location. The device 11 can be executed in the form of a unit built into the terminal case, or located outside the latter at a distance and connected with the programming and computing unit. This unit can have not only features of transfer of funds to the user's account, but also of writing-off of amounts from the user's account and/or output of these amounts. Such construction allows to use various mechanisms of account crediting and to use: 1) proximity cards (work on the principle of credit cards, but to write-off the funds it is necessary just to bring the card to the device (to rest or bring to a distance of not more than 10 cm)
2) Payments by means of the telephone set:
   - Work on the principle of a proximity card if a phone has the necessary device;
   - Gives commands to write-off from the account by means of SMS or special program on a phone;
   - System whereby the special bar code is sent to the phone which is read by the scanner of the organizer (on a terminal, in the organization's payment office);
   - System whereby the bar code of an item is read by a phone camera then the amount is automatically written off.
3) Electronic payment systems. It is possible to provide access from the gambling terminal directly to the trader account registered in one of the payment systems for:
   - One-time transfer of specific amount to the trader's gambling account.
      - Issuing of a permit to the gambling system by results of a game session to automatically write off or transfer money from/to electronic payment system account.
4) Account and password in the sponsoring organization. To access, credit, make write-off from the gambling account the personal client's account and password, or only the password (aka account) is used:
   - One-time account (registered in the organization's payment office just before a game)
   - Constant account (registered in the organization, on a site, during purchase of a special card; money can be transferred through the payment systems on a site or in cash in the organization's payment office)
5) Cash and card reader: on the terminal, in the organization's payment office.
6) Scratch cards (issued with the fixed face value (a 500-roubles card, a code field is rubbed, a code is entered to the device).

Thus, the terminal has the following capabilities:
1) Input of money to the game system by means of various devices (installed both in each separate device and only in the organization's payment office):
   - cash acceptor/dispenser;
   - magnetic cards reader (card reader);
      proximity cards and devices reader;
      bar codes reader;
      other acceptable devices.
2) Input of money to the game system without use of additional input-output devices:
   by means of electronic payment systems (WebMoney, Yandex money,
   etc.)
use of special software (including, banking) on the mobile phone (mobile banking, bar code reading by a phone camera, etc.), entering of a special password (scratch cards).

The programming and computing unit has a feature of remote connection with the server of the exchange and information agencies for displaying on the monitor's screen in the specified fields of information about the current quotations, stakes and calculation of profit and loss for each transaction. The specified unit also has a feature of displaying of the stakes made, with a feature of input of the price for a rate (point) change and a stake amount through the keyboard and transfer of a premium to the account of a credit and financial card holder or output of a premium through a money output device.

To simplify access to the terminal and transfer of the amount into the trading account of the clients it is additionally equipped with the dactyloscopic control and authentication system. To manage the terminal the latter is additionally equipped with a voice control system. These terminal features allow to control the user's authenticity. During a session a client chooses a trade tool (for example - a currency pair) and cost of at least one minimum price change for this trade tool. Next, according to its expectations and the current quotations feed, a client takes a position by executing a commercial transaction for purchase or sale of a trade tool. According to the current quotations feed, the terminal calculates the client's profit (loss) amount and displays to the client the generated cash balance. The client can at any moment close its position by execution of an opposite transaction (to buy if he was selling or conversely). Thus one gambling cycle comes to the end. The number of gambling cycles within one session is limited only to the cash balance. The gambling cycle can be terminated forcibly if the price changes for the chosen trade tool led to the fact that the cash balance is zero. Essential advantage of the invention is that there is no need in complex and long-term procedures of preliminary clients registration, bank accounts opening, transfer of money to the dealing centre. All operations and settlements with the client are carried out directly through the terminal on site.

The terminal is an essentially new gambling tool and will contribute to new clients acquisition, including regular, since there are no other available systems of gambling as simple as this system is. From the clients' point of view the terminal is attractive because it operates on the basis of world quotations of trade tools. These quotations can be easily checked through alternative information sources (such as TV channels and the Internet publications) that makes impossible to manipulate with quotations in favour of an organisation (where a terminal is installed) and significantly reduces incidences of fraud.

As for implementation of "the programming and computing unit having a feature of... ", the algorithm of such unit operation is described, for example in the book of Olga Degtyareva, Olga Kandinskaya "Stock-exchange industry: University textbook", M, Banks and exchanges, UNITI, 1997 503 pages, ISBN 5-85173-060-9, chapter 7 "Development of electronic exchange trading system", section 7.3 "Electronic Algorithms for Trading", section 7.4.2 "Illustration of Electronic Trading Operation (by the example of ATC/2 System)" (an electronic version of this section is attached), http://kandinskaya.narod.ru/delo07_r.html.

In this book there are examples of implementation of the main electronic exchange components, including calculations algorithm, interaction schemes, usage of software and hardware by the example of computers of 386 and 486 series. In particular, the example of electronic trading operation using ATC/2 system is provided in detail. Under transactions algorithm, described in this book, is understood the transactions scenario, that is a sequence of actions and a set of conditions under which an object is purchased and sold. Therefore, such feature as "the computing device having a feature of stakes accepting and calculation of profit and loss for each transaction" in relation to the modern state of art which become widely known in the field of exchange transactions, was not disclosed in the patent specification. The present invention is industrially applicable as it can be implemented using technologies applied in production of electronic and mechanical gaming machines and computerized emote access systems.

## Claims

1. The remote communication terminal for trading on the exchange markets, comprising a monitor and a keyboard or a monitor with a keyboard on a monitor screen, a device providing transfer of funds to user's account and/or write-off of funds from the user's account and/or money output, a device for remote connection in the form of the programming and computing unit having a feature of displaying of the graphic interface with the fields for displaying of target information, connected with the control server for the user's account state, a device providing transfer of funds to the user's account and/or write-off of funds from the user's account and/or money output, produced in the form of a unit built into the terminal case, or located outside the latter at a distance and connected with the programming and computing unit having a feature of remote connection with the servers of the exchange markets and information agencies for displaying in the specified fields of information about the current quotations, stakes and calculation of profit and loss for each transaction, thus the specified unit also has a feature of displaying of stakes and with a feature of input of the price for a rate (point) change and a stake amount through the keyboard.

2. The terminal according to claim 1 **characterized in that** transfer and write-off of funds to/ from the user's account are carried out by means of software installed in the terminal.

3. The terminal according to claim 1 **characterized in that** to simplify access to the terminal it is additionally equipped with the dactyloscopic control and authentication system.

4. The terminal according to claim 1 **characterized in that** to manage the terminal the latter is additionally equipped with a voice control system.

5. The terminal according to claim 1 **characterized in that** the terminal is equipped with a device allowing to use the 3-D image.
